# EUROPEAN PATENT APPLICATION

(11) **EP 4 794 062 A1**
(43) Date of publication of application: **19.08.2026**
(21) Application number: 25869599.8
(22) Date of filing: 18.11.2025
(51) Int. Cl.: H01M 10/6556

(54) **BATTERY UNIT AND BATTERY PACK INCLUDING SAME**

(30) Priority: 11.12.2024 KR 20240183627
(71) Applicant: LG ENERGY SOLUTION, LTD., Seoul 07335 (KR)
(72) Inventor: LIM, Chae Won, Daejeon 34122 (KR); CHOI, Jong Hwa, Daejeon 34122 (KR); KIM, Min Bum, Daejeon 34122 (KR); JEONG, Su Jin, Daejeon 34122 (KR); HAM, Hyun Jun, Daejeon 34122 (KR)
(74) Representative: Plasseraud IP
(86) International application number: PCT/KR2025/019079
(87) International publication number: WO 2026/127419

(57) **Abstract**

The present disclosure provides a battery unit including: a plurality of battery cells stacked in one direction; side plates disposed at both end sides in the stacking direction of the plurality of battery cells; a band member connected to at least one of mutual upper ends and mutual lower ends of the side plates; and a plurality of adhesive members positioned between the band member and the plurality of battery cells and bonded to the band member and the plurality of battery cells, wherein the plurality of adhesive members is formed spaced apart from each other, and a cooling flow path is formed between the spaced plurality of adhesive members.

## Description

### [Technical Field]

The present disclosure relates to a battery unit and a battery pack including the same, and more particularly, to a battery unit capable of effectively cooling battery cells and a battery pack including the same.

This application claims the benefit of Korean Patent Application No. 10-2024-0183627, filed on December 11, 2024, the disclosure of which is incorporated herein by reference.

### [Background]

Batteries such as lithium-ion batteries have the advantages of high energy density and operating voltage, and stable power capacity without memory effect, enabling long-term use. Accordingly, batteries are being used as power sources in various fields, from diverse mobile electronic devices to electric vehicles and hybrid vehicles.

The basic structure of a battery consists of an electrode assembly including a positive electrode plate coated with a positive electrode active material, a negative electrode plate coated with a negative electrode active material, and a separator positioned between the positive and negative electrode plates to prevent electrical short circuits and allow lithium ions to pass through; a case that hermetically accommodates the electrode assembly; and an electrolyte injected inside the case.

However, since the electrode assembly is sealed inside the case in a stacked state, if heat dissipation is not properly achieved, degradation of the battery occurs, leading not only to reduced lifespan but also to significantly compromised safety.

In cases where rapid charging and discharging are required, such as in battery packs for electric vehicles or hybrid vehicles, a large amount of heat is generated in the process of instantaneously providing high output, making the need for effective heat dissipation even greater. If such effective heat dissipation is not achieved, degradation due to heat accumulation begins, and in severe cases, ignition or explosion may occur.

Therefore, cooling technology that dissipates the heat generated during use of a battery pack to which battery cell units are applied is necessary for effective thermal management.

Accordingly, there is a need for technology related to a battery unit capable of effectively cooling battery cells and a battery pack including the same.

### [Summary]

### [Technical Problem]

A first technical problem to be achieved by the present disclosure is to provide a battery unit capable of enhancing the cooling effect throughout the entire battery unit.

A second technical problem to be achieved by the present disclosure is to provide a battery pack capable of enhancing the cooling effect throughout the entire battery unit.

### [Technical Solution]

In order to achieve the first technical problem, the present disclosure provides a battery unit including: a plurality of battery cells stacked in one direction; side plates disposed at both end sides in the stacking direction of the plurality of battery cells; a band member connected to at least one of mutual upper ends and mutual lower ends of the side plates; and a plurality of adhesive members positioned between the band member and the plurality of battery cells and bonded to the band member and the plurality of battery cells, wherein the plurality of adhesive members is formed spaced apart from each other, and a cooling flow path is formed between the spaced plurality of adhesive members.

In some embodiments, the battery unit may further include an elastic pad layer provided between the battery cells at both end sides among the plurality of battery cells and the side plates.

In some embodiments, the battery unit may further include an elastic pad layer between the plurality of battery cells.

In some embodiments, the band member is plural in number, and the plurality of band members may be disposed spaced apart from each other.

In some embodiments, the cooling flow path may be open toward the plurality of battery cells so that, when insulating oil flows into the cooling flow path, the insulating oil can contact the plurality of battery cells and the band member, and so as to communicate with the plurality of battery cells and the band member.

In some embodiments, the cooling flow path may form a cooling flow path inlet and a cooling flow path outlet through which insulating oil can flow in and out.

In some embodiments, the cooling flow path may be formed in a width direction that is a direction crossing the width of the band member so that insulating oil can flow in and out.

In some embodiments, in the band member, the thickness of the band member concave part, which is the portion where the cooling flow path is formed, may be thinner than the thickness of the band member protruding part, which is the portion where the cooling flow path is not formed and which is bonded to the adhesive member.

In some embodiments, the battery unit further includes a busbar frame cover surrounding electrode leads provided on the plurality of battery cells, and the busbar frame cover may have an opening part through which insulating oil flows in and out.

In some embodiments, the battery cells constituting the plurality of battery cells are bidirectional pouch cells in which a positive lead and a negative lead are separately disposed on both sides of the battery cell, the positive lead and the negative lead of the bidirectional pouch cell are each disposed in a direction perpendicular to the stacking direction of the plurality of battery cells, the battery unit is provided with a pair of busbar frame covers that respectively surround the positive lead and the negative lead, and the pair of busbar frame covers may be provided with an opening part through which insulating oil flows in and out.

In order to achieve the second technical problem, the present disclosure provides a battery pack including: the battery unit; and
a pack case comprising an accommodation space in which at least one battery unit is mounted, wherein the pack case comprises a pack case inlet and a pack case outlet through which insulating oil can flow in and out to the battery unit, and the plurality of battery cells is stacked in a direction crossing the inflow direction of the insulating oil.

In some embodiments, the battery pack may further include an insulating oil that flows in and out of the accommodation space of the pack case and immerses the battery unit in the accommodation space.

In some embodiments, a first adhesive layer may be provided between the band member and the pack case.

### [Advantageous Effects]

The battery cell unit, battery pack, and frame for a battery cell unit according to embodiments of the present disclosure have the effect of reducing manufacturing costs and improving space utilization.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a diagram showing a battery pack according to an embodiment of the present disclosure.
FIG. 2 is a diagram showing a state in which the upper cover of the battery pack according to an embodiment of the present disclosure is disassembled.
FIG. 3 is a diagram showing a battery unit according to an embodiment of the present disclosure.
FIG. 4 is a diagram showing a state in which the battery unit according to an embodiment of the present disclosure is disassembled.
FIG. 5 is a diagram showing a cross-section of the battery unit bonded to the pack case upper cover and the pack case lower plate according to an embodiment of the present disclosure, cut along the cutting line A-B.
FIG. 6 is a diagram showing a cross-section including an adhesive member among the cross-sections of the battery unit bonded to the pack case upper cover and the pack case lower plate according to an embodiment of the present disclosure, cut along the cutting line C-D.
FIG. 7 is a diagram showing a band member used in the battery unit according to an embodiment of the present disclosure.

### [Best Mode for Carrying out the Invention]

Hereinafter, preferred embodiments of the concept of the present disclosure will be described in detail with reference to the accompanying drawings. However, the embodiments of the concept of the present disclosure may be modified in various other forms, and the scope of the concept of the present disclosure should not be construed as being limited by the embodiments described below. The embodiments of the concept of the present disclosure are preferably construed as being provided to more completely explain the concept of the present disclosure to those of ordinary skill in the art. The same reference numerals denote the same elements throughout. Furthermore, various elements and regions in the drawings are schematically drawn. Therefore, the concept of the present disclosure is not limited by the relative sizes or spacings drawn in the accompanying drawings.

Terms such as first, second, etc. may be used to describe various components, but the components are not limited by these terms. These terms are used only for the purpose of distinguishing one component from another. For example, a first component may be named a second component, and conversely, a second component may be named a first component without departing from the scope of the concept of the present disclosure.

The terms used in the present application are used only to describe specific embodiments and are not intended to limit the concept of the present disclosure. Singular expressions include plural expressions unless the context clearly dictates otherwise. In the present application, expressions such as "comprise" or "have" are intended to designate that the features, numbers, steps, operations, components, parts, or combinations thereof described in the specification exist, and should be understood as not precluding in advance the possibility of existence or addition of one or more other features, numbers, operations, components, parts, or combinations thereof.

Unless otherwise defined, all terms used herein, including technical and scientific terms, have the same meaning as commonly understood by those of ordinary skill in the art to which the concept of the present disclosure belongs. In addition, terms as defined in dictionaries that are commonly used should be interpreted as having meanings consistent with the meanings they have in the context of the relevant technology, and should not be interpreted in an excessively formal sense unless explicitly defined herein.

Where an embodiment can be implemented differently, a specific process order may be performed differently from the described order. For example, two processes described consecutively may be performed substantially simultaneously, or may be performed in the reverse order of the described order.

In the accompanying drawings, variations in the illustrated shapes may be expected depending on, for example, manufacturing techniques and/or tolerances. Therefore, the embodiments of the present disclosure should not be construed as being limited to the specific shapes of the regions illustrated in the present specification, and should include, for example, changes in shape caused during the manufacturing process. All terms "and/or" used herein include each and every combination of one or more of the mentioned components. In addition, the term "substrate" as used herein may refer to the substrate itself, or a laminated structure including the substrate and a predetermined layer or film formed on its surface. Also, "the surface of a substrate" as used herein may refer to the exposed surface of the substrate itself, or the outer surface of a predetermined layer or film formed on the substrate.

The following describes one aspect of the present disclosure for achieving the first technical objective mentioned above.

### (First Embodiment)

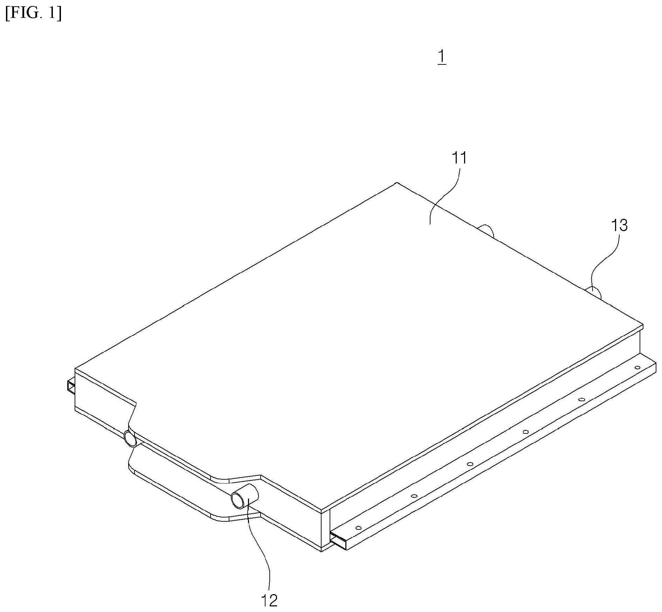

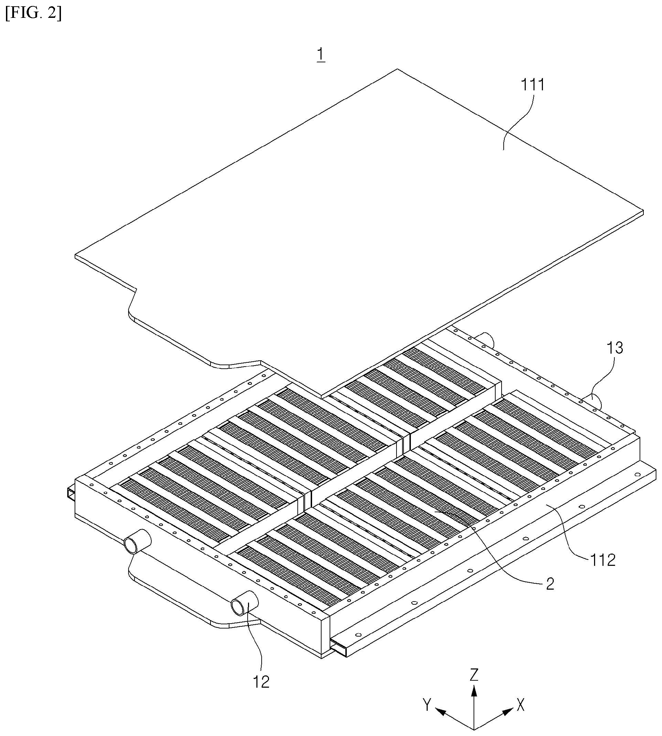

FIG. 1 is a diagram showing a battery pack 1 according to an embodiment of the present disclosure, and FIG. 2 is a diagram showing a state in which the upper cover of the battery pack 1 according to an embodiment of the present disclosure is disassembled.

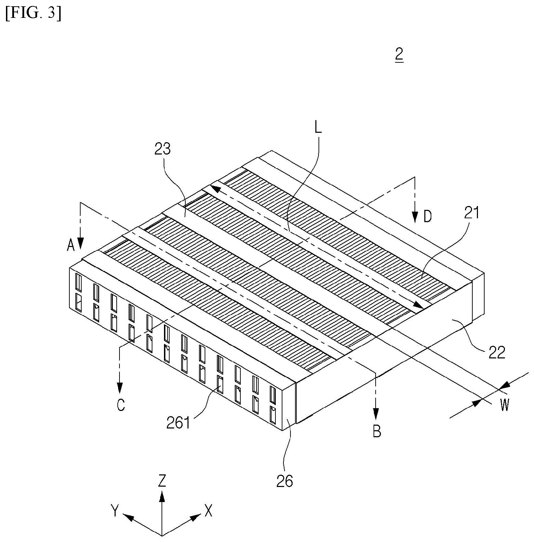

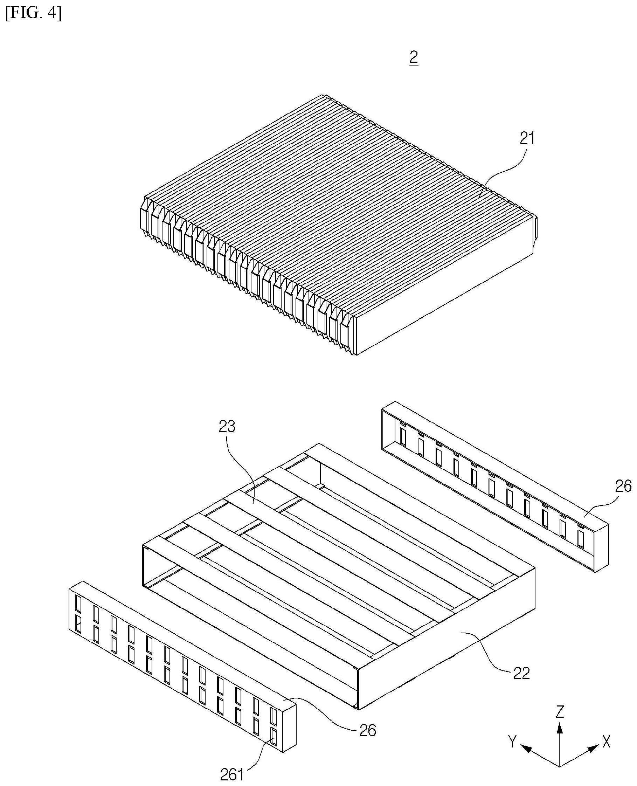

FIG. 3 is a diagram showing a battery unit 2 according to an embodiment of the present disclosure, and FIG. 4 is a diagram showing a state in which the battery unit 2 according to an embodiment of the present disclosure is disassembled.

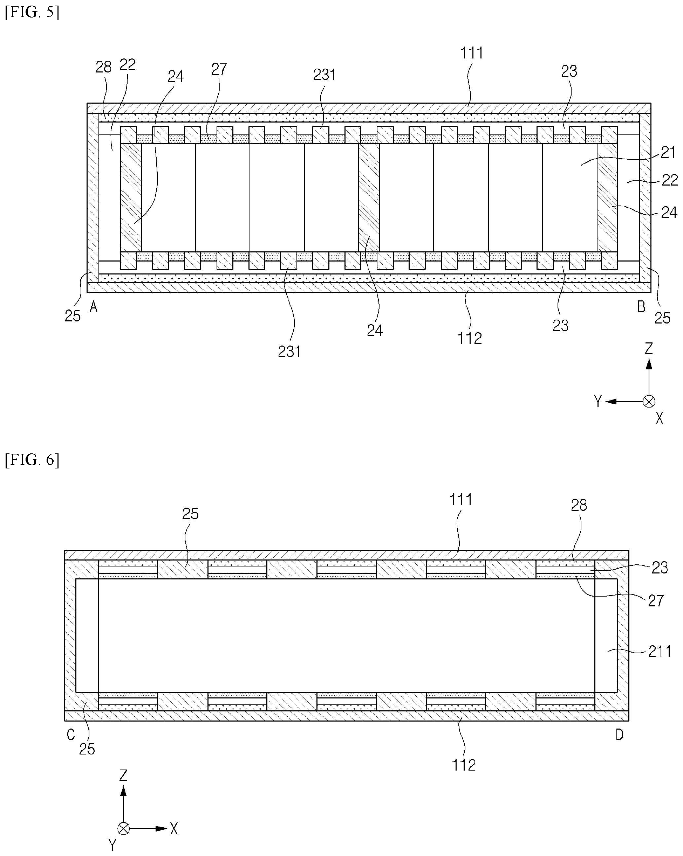

FIG. 5 is a diagram showing a cross-section of the battery unit 2 bonded to the pack case upper cover 1111 and the pack case lower plate 112 according to an embodiment of the present disclosure, cut along the cutting line A-B, and FIG. 6 is a diagram showing a cross-section including an adhesive member 27 among the cross-sections of the battery unit 2 bonded to the pack case upper cover 1111 and the pack case lower plate 112 according to an embodiment of the present disclosure, cut along the cutting line C-D.

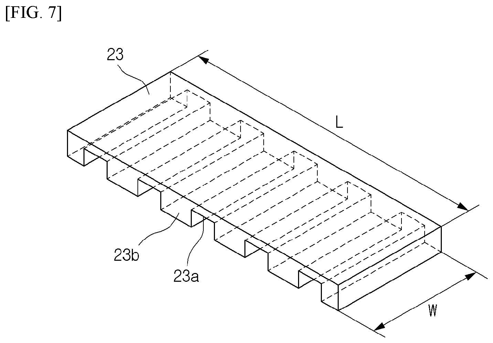

FIG. 7 is a diagram showing a band member 23 used in the battery unit 2 according to an embodiment of the present disclosure.

Referring to FIGS. 1 to 7, the battery unit 2 according to an embodiment of the present disclosure may include a plurality of battery cells 21, side plates 22, a band member 23, and a plurality of adhesive members 27.

The plurality of battery cells 21 may be stacked in one direction.
The side plates 22 may be disposed at both end sides in the stacking direction of the plurality of battery cells 21.

The band member 23 may be connected to at least one of mutual upper ends and mutual lower ends of the side plates 22.

By being connected to at least one of mutual upper ends and mutual lower ends of the side plates 22, the band member 23 may be disposed at one or more of the upper and lower parts of the pack case 11.

By being connected to at least one of mutual upper ends and mutual lower ends of the side plates 22, the band member 23 supports the plurality of battery cells 21 and can suppress positional displacement of the plurality of battery cells 21 during external impact.

The side plates are disposed at both end sides in the stacking direction (e.g., Y direction) of the plurality of battery cells 21, so as to support the plurality of battery cells 21 in a state of being stacked in one direction.

In some embodiments, the band member 23 may have a shape in which the width W is narrower than the length L of the band member 23.
In some embodiments, the ratio of the length L to the width W may be 3 to 20 times.

If the ratio of the length L to the width W is less than 3 times, the amount of insulating oil 25 flowing into the plurality of battery cells 21 may be insufficient to cool the plurality of battery cells 21, and if it is greater than 20 times, the durability of the band member 23 may be weakened, making it insufficient to support the plurality of battery cells 21.

In some embodiments, the band member 23 may be plural in number. When the band member 23 is plural in number, the band members 23 may be disposed spaced apart from each other with gaps between them.

In some embodiments, the plurality of adhesive members 27 may be positioned between the band member 23 and the plurality of battery cells 21 so that the band member 23 and the plurality of battery cells 21 are bonded.

By being positioned between the band member 23 and the plurality of battery cells 21 and bonding the band member 23 and the plurality of battery cells 21, the plurality of adhesive members 27 can prevent positional movement of the plurality of battery cells 21 even under external impact.

In some embodiments, the plurality of adhesive members 27 are formed spaced apart from each other, and a cooling flow path 231 may be formed between the spaced plurality of adhesive members 27.

The cooling flow path 231 is formed between the spaced plurality of adhesive members 27 by the plurality of adhesive members 27 being formed spaced apart from each other, so that the space between the band member 23 and the plurality of battery cells 21 can function as a cooling flow path 231.

In some embodiments, the adhesive member 27 may be an adhesive tape, for example, a double-sided tape.

Since the adhesive member 27 is an adhesive tape, it may be easy to form the plurality of adhesive members 27 spaced apart.

In some embodiments, the adhesive member 27 may be an adhesive tape with a thickness of 0.1 to 10 mm.

If the thickness of the adhesive member 27 is less than 0.1 mm, it may not be easy for the insulating oil 25 to flow in, and if it is greater than 10 mm, it may be inefficient in terms of space utilization.

In some embodiments, the battery unit 2 may further include an elastic pad layer 24 provided between the battery cells at both end sides among the plurality of battery cells 21 and the side plates 22.

By further including an elastic pad layer 24 provided between the battery cells at both end sides among the plurality of battery cells 21 and the side plates 22, the battery unit 2 can mitigate external impacts on the plurality of battery cells 21 and can alleviate the pressure generated during swelling of the battery cells through the elastic pad layer 24.

In some embodiments, an elastic pad layer 24 may be further included between the plurality of battery cells 21.

By further including an elastic pad layer 24 between the plurality of battery cells 21, external impacts on the plurality of battery cells 21 can be mitigated and the pressure generated during swelling of the battery cells can be alleviated through the elastic pad layer 24.

In some embodiments, the band member 23 may be plural in number, and the plurality of band members 23 may be disposed spaced apart from each other.

By the band member 23 being plural in number and the plurality of band members 23 being disposed spaced apart from each other, the insulating oil 25 discharged through the cooling flow path 231 can be merged in the space between the plurality of band members 23, which can be efficient for cooling the plurality of battery cells 21.

In some embodiments, the cooling flow path 231 may be open toward the plurality of battery cells 21 so that, when insulating oil 25 flows into the cooling flow path 231, the insulating oil 25 can contact the plurality of battery cells 21 and the band member 23, and so as to communicate with the plurality of battery cells 21 and the band member 23.

In some embodiments, the cooling flow path 231 may be open toward the plurality of battery cells 21 in a direction (e.g., Z direction) so as to communicate with the plurality of battery cells 21 and the band member 23.

By the cooling flow path 231 being open in a direction (e.g., Z direction) toward the plurality of battery cells 21 so as to communicate with the plurality of battery cells 21 and the band member 23, when insulating oil 25 flows into the cooling flow path 231, the insulating oil 25 directly contacts the plurality of battery cells 21 and the band member 23, thereby efficiently cooling the plurality of battery cells 21.

In some embodiments, the cooling flow path 231 may be formed in the width direction (e.g., X direction), which is the direction crossing the width W of the band member 23, so that insulating oil 25 can flow in and out.

The width direction (e.g., X direction), which is the direction crossing the width W of the band member 23 so that insulating oil 25 can flow in and out through the cooling flow path 231, may be the direction (e.g., X direction) crossing the stacking direction (e.g., Y direction) of the plurality of battery cells 21.

By the insulating oil 25 flowing in a direction (e.g., X direction) crossing the stacking direction (e.g., Y direction) of the plurality of battery cells 21, the insulating oil 25 flows between the plurality of battery cells 21 to cool the plurality of battery cells 21, thereby enabling efficient cooling.

In some embodiments, in the band member 23, the thickness of the band member 23 concave part, which is the portion where the cooling flow path 231 is formed, may be thinner than the thickness of the band member protruding part 23b, which is the portion where the cooling flow path 231 is not formed and which is bonded to the adhesive member 27.

In the band member 23, by the thickness of the band member 23 concave part, which is the portion where the cooling flow path 231 is formed, being thinner than the thickness of the band member protruding part 23b, which is the portion where the cooling flow path 231 is not formed and which is bonded to the adhesive member 27, the cross-sectional area of the cooling flow path 231 can be widened to increase the flow rate of insulating oil 25.

In some embodiments, the battery unit 2 may further include a busbar frame cover 26 surrounding electrode leads 211 provided on the plurality of battery cells 21, and the busbar frame cover 26 may have an opening part 261 through which the insulating oil 25 flows in and out.

By the battery unit 2 further including a busbar frame cover 26 surrounding electrode leads 211 provided on the plurality of battery cells 21, and the busbar frame cover 26 having an opening part 261 through which the insulating oil 25 flows in and out, the insulating oil 25 introduced into the battery pack 1 can easily flow into the battery unit 2.

In some embodiments, the battery cells constituting the plurality of battery cells 21 are bidirectional pouch cells in which a positive lead and a negative lead are separately disposed on both sides of the battery cell, and the positive lead and the negative lead of the bidirectional pouch cell may each be disposed in a direction (e.g., X direction) perpendicular to the stacking direction (e.g., Y direction) of the plurality of battery cells.

By the positive lead and the negative lead of the bidirectional pouch cell being each disposed in a direction (e.g., X direction) perpendicular to the stacking direction (e.g., Y direction) of the plurality of battery cells, the insulating oil 25 can easily flow between the plurality of battery cells 21 when it flows in.

In some embodiments, the battery unit 2 includes a pair of busbar frame covers 26 that respectively surround the positive lead and the negative lead, and the pair of busbar frame covers 26 may have opening parts 261 through which the insulating oil 25 flows in and out.

By the pair of busbar frame covers 26 having openings 261 through which the insulating oil 25 flows in and out, the insulating oil 25 introduced into the battery pack 1 can easily flow into the battery unit 2.

### (Second Embodiment)

FIG. 1 is a diagram showing a battery pack 1 according to an embodiment of the present disclosure, and FIG. 2 is a diagram showing a state in which the upper cover of the battery pack 1 according to an embodiment of the present disclosure is disassembled.

FIG. 3 is a diagram showing a battery unit 2 according to an embodiment of the present disclosure, and FIG. 4 is a view showing a state in which the battery unit 2 according to an embodiment of the present disclosure is disassembled.

FIG. 5 is a diagram showing a cross-section of the battery unit 2 bonded to the pack case upper cover 1111 and the pack case lower plate 112 according to an embodiment of the present disclosure, cut along the cutting line A-B, and FIG. 6 is a diagram showing a cross-section including an adhesive member 27 among the cross-sections of the battery unit 2 bonded to the pack case upper cover 1111 and the pack case lower plate 112 according to an embodiment of the present disclosure, cut along the cutting line C-D.

Referring to FIGS. 1 to 6, the battery pack 1 according to an embodiment of the present disclosure may include the battery unit 2 and a pack case 11.

The pack case 11 may include an accommodation space in which at least one battery unit 2 is mounted.

The pack case 11 includes a pack case inlet 12 and a pack case outlet 13 through which insulating oil 25 can flow in and out to the battery unit 2, and provides a battery pack 1 in which the plurality of battery cells 21 are stacked in a direction crossing the inflow direction of the insulating oil 25.

In some embodiments, the battery pack may further include insulating oil 25 that flows in and out of the accommodation space of the pack case 11 and immerses the battery unit 2 in the accommodation space.

In some embodiments, a first adhesive layer 28 may be provided between the band member 23 and the pack case 11.

The battery unit 2 may include battery cells, side plates 22, a band member 23, and adhesive members 27, and the battery unit 2 may be the battery unit 2 according to the first embodiment of the present disclosure.

The pack case 11 may include an accommodation space in which at least one battery unit 2 is mounted.

In some embodiments, the pack case 11 may be composed of a pack case upper cover 1111 and a pack case lower plate 112.

The pack case upper cover 1111 and the pack case lower plate 112 may be detachably attached.

By being detachably attached, the battery unit 2 accommodated in the pack case 11 can be replaced.

The pack case 11 may include a pack case inlet 12 and a pack case outlet 13 through which insulating oil 25 can flow in and out to the battery unit 2.

By including a pack case inlet 12 and a pack case outlet 13 through which insulating oil 25 can flow in and out to the battery unit 2, the pack case 11 can introduce insulating oil 25 from the outside of the pack case 11 to pass through the inside of the pack case 11 and discharge it, thereby cooling the battery cells included in the battery unit 2.

The plurality of battery cells 21 may be stacked in a direction crossing the inflow direction of the insulating oil 25.

By being stacked in a direction crossing the inflow direction of the insulating oil 25, the plurality of battery cells 21 can be efficiently cooled as insulating oil 25 flows between the plurality of battery cells 21.

In some embodiments, the battery pack may further include insulating oil 25 that flows in and out of the accommodation space of the pack case 11 and immerses the battery unit 2 in the accommodation space.

The insulating oil 25 may be a general insulating oil used in the art, and is not particularly limited to any one type.

By further including insulating oil 25 that flows in and out of the accommodation space of the pack case 11 and immerses the battery unit 2 in the accommodation space, the plurality of battery cells 21 can be efficiently cooled, and short circuits between battery cells can be prevented due to the insulating properties of the insulating oil 25.

In some embodiments, a first adhesive layer 28 may be provided between the band member 23 and the pack case 11.

The first adhesive layer 28 may have elasticity so as to protect the plurality of battery cells 21 and the band member 23 even against external impact.

In some embodiments, the first adhesive layer 28 may be formed by an adhesive.

The adhesive, after curing, strongly adheres to the plurality of battery cells 21 and the pack case 11, thereby preventing positional change or damage to the plurality of battery cells 21 caused by external impact.

Although the embodiments of the present disclosure have been described in detail as described above, those of ordinary skill in the technical field to which the present disclosure belongs will be able to implement the present disclosure in various modifications without departing from the spirit and scope of the present disclosure as defined in the appended claims. Therefore, future modifications of the embodiments of the present disclosure will not be able to depart from the technology of the present disclosure.

## Claims

1. A battery unit comprising:
a plurality of battery cells stacked in one direction;
side plates disposed at both end sides in the stacking direction of the plurality of battery cells;
a band member connected to at least one of mutual upper ends and mutual lower ends of the side plates; and
a plurality of adhesive members positioned between the band member and the plurality of battery cells and bonded to the band member and the plurality of battery cells, wherein
the plurality of adhesive members is formed spaced apart from each other, and
a cooling flow path is formed between the spaced plurality of adhesive members.

2. The battery unit of claim 1, wherein
the battery unit further comprises an elastic pad layer provided between the battery cells at both end sides among the plurality of battery cells and the side plates.

3. The battery unit of claim 1, further comprising:
an elastic pad layer between the plurality of battery cells.

4. The battery unit of claim 1, wherein
the band member is plural in number, and
the plurality of band members is disposed spaced apart from each other.

5. The battery unit of claim 1, wherein
the cooling flow path is open toward the plurality of battery cells so that, when insulating oil flows into the cooling flow path, the insulating oil can contact the plurality of battery cells and the band member, and so as to communicate with the plurality of battery cells and the band member.

6. The battery unit of claim 5, wherein
the cooling flow path is formed in a width direction that is a direction crossing the width of the band member so that insulating oil can flow in and out.

7. The battery unit of claim 5, wherein
in the band member, the thickness of the band member concave part, which is the portion where the cooling flow path is formed, is thinner than the thickness of the band member protruding part, which is the portion where the cooling flow path is not formed and which is bonded to the adhesive member.

8. The battery unit of claim 1, wherein
the battery unit further comprises a busbar frame cover surrounding electrode leads provided on the plurality of battery cells, and
the busbar frame cover has an opening part through which insulating oil flows in and out.

9. The battery unit of claim 1, wherein
the battery cells constituting the plurality of battery cells are bidirectional pouch cells in which a positive lead and a negative lead are separately disposed on both sides of the battery cell,
the positive lead and the negative lead of the bidirectional pouch cell are each disposed in a direction perpendicular to the stacking direction of the plurality of battery cells,
the battery unit is provided with a pair of busbar frame covers that respectively surround the positive lead and the negative lead, and
the pair of busbar frame covers is provided with an opening part through which insulating oil flows in and out.

10. A battery pack comprising:
the battery unit of any one of claims 1 to 9; and
a pack case comprising an accommodation space in which at least one battery unit is mounted, wherein
the pack case comprises a pack case inlet and a pack case outlet through which insulating oil can flow in and out to the battery unit, and
the plurality of battery cells is stacked in a direction crossing the inflow direction of the insulating oil.

11. The battery pack of claim 10, further comprising:
an insulating oil that flows in and out of the accommodation space of the pack case and immerses the battery unit in the accommodation space.

12. The battery pack of claim 10, wherein
a first adhesive layer is provided between the band member and the pack case.
